# NEUE EUROPÄISCHE PATENTSCHRIFT

(11) **EP 0 542 033 B2**
(45) Veröffentlichungstag und Bekanntmachung des Hinweises auf die Entscheidung über den Einspruch: **25.04.2001**
(45) Hinweis auf die Patenterteilung: 15.01.1997
(21) Anmeldenummer: 92118360.4
(22) Anmeldetag: 28.10.1992
(51) Int. Cl.: C09B 67/20, C09B 67/46, C09B 63/00, C09D 11/02

(54) **Verwendung von Pigmentzubereitungen zur Herstellung von Pasten, Druckfarben und Lacken**
Use of pigment preparations for the manufacture of pastes, printing inks and paints
Utilisation de préparations de pigments pour la fabrication de pâtes, d'encres d'imprimerie et de peintures

(30) Priorität: 14.11.1991 DE 4137476
(43) Veröffentlichungstag der Anmeldung: 19.05.1993
(73) Patentinhaber: BASF Aktiengesellschaft, 67063 Ludwigshafen (DE)
(72) Erfinder: Birkhofer, Hermann, Dr., W-6700 Ludwigshafen (DE); Denzinger, Walter, W-6720 Speyer (DE); Hartmann, Heinrich, Dr., W-6703 Limburgerhof (DE); Gomez, Juan Antonio Gonzalez, Dr., W-4400 Muenster (DE); Guenthert, Paul, Dr., W-6707 Schifferstadt (DE); Jesse, Joachim, Dr., W-6714 Weisenheim (DE); Kreuzer, Robert, W-6700 Ludwigshafen (DE); Oppenlaender, Knut, Dr., W-6700 Ludwigshafen (DE); Roth, Reinhard Ulrich, Dr., W-6700 Ludwigshafen (DE); Sens, Benno, Dr., W-5902 Netphen (DE)

(56) Entgegenhaltungen:
- EP-A- 0 033 213
- EP-A- 0 058 865
- EP-A- 0 412 389
- EP-A- 0 498 195
- DE-A- 3 803 810
- GB-A- 1 155 550
- GB-A- 2 026 006
- JP-A- 1 004 227
- JP-A- 1 056 706
- US-A- 3 249 455
- US-A- 3 262 898

## Beschreibung

Die vorliegende Erfindung betrifft die Verwendung von Pigmentzubereitungen, enthaltend
(a) mindestens ein feinteiliges Pigment,
(b) mindestens ein durch radikalische Polymerisation von
   (α₁) C₈- bis C₄₀-Monoolefinen oder
   (α₂) C₈- bis C₄₀-Alkylvinylethern oder
   (α₃) Mischungen aus C₈- bis C₄₀-Alkylvinylethern und bis zu 50 mol-% C₈- bis C₄₀-Monoolefinen mit
   (β) monoethylenisch ungesättigten C₄- bis C₁₂-Dicarbonsäuren oder -Dicarbonsäureanhydriden
   erhältliches Copolymerisat mit einer Molmasse von 500 bis 12 000 g/mol, dessen Carboxyl- oder Anhydridgruppen ganz oder teilweise unter Amidbildung mit Ammoniak oder Aminen oder ganz oder teilweise mit Amino- oder Hydroxycarbonsäuren umgesetzt sind,
(c) gegebenenfalls weitere in Pigmentzubereitungen übliche Hilfsmittel,
zur Herstellung von Pasten für lösungsmittelhaltige Druckfarben und lösungsmittelhaltige Lacke, lösungsmittelhaltigen Druckfarben und lösungsmittelhaltigen Lacken sowie Pasten für lösungsmittelhaltige Druckfarben und lösungsmittelhaltige Lacke, lösungsmittelhaltige Druckfarben und lösungsmittelhaltige Lacke, welche diese Pigmentzubereitungen enthalten.

Weiterhin betrifft die Erfindung neue Pigmentzubereitungen.

Bei der Druckfarbenherstellung erfolgt das Anreiben der Pigmente mehr und mehr bei höheren Konzentrationen. In zunehmendem Maße werden auch sogenannte Stammpasten, d.h. bindemittelarme oder gar bindemittelfreie Dispersionen von Pigmenten in Mineralöl, Toluol und/oder anderen Lösungsmitteln hergestellt, die hohe Pigmentkonzentrationen aufweisen. Die Pasten werden dann mit den Bindemitteln und/oder konzentrierten Bindemittellösungen zu Druckfarben aufgelackt. Beim konzentrierten Anreiben werden an das Fließverhalten der Druckfarben oder Stammpasten hohe Anforderungen gestellt. Diese werden bei Verwendung der in Druckfarben am häufigsten verwendeten organischen Buntpigmente wie C.I. Pigment Blue 15, C.I. Pigment Red 57 und C.I. Pigment Yellow 12 und 13 um so weniger erfüllt, je höher pigmentiert angerieben wird.

Bekanntermaßen ist es jedoch durch Belegen der Pigmente mit oberflächenaktiven Mitteln möglich, Pigmentzubereitungen herzustellen, die zu besser fließenden Druckfarben oder zu noch pumpbaren Pasten mit hoher Pigmentkonzentration verarbeitet werden können.

In der DE-A-21 62 484 sind Dispergierhilfsmittel auf der Basis von Polyestern von Hydroxycarbonsäuren, insbesondere Hydroxystearinsäuren beschrieben.

Aus der EP-A-189 385 sind Mischungen eines Dipolyesteramids, ebenfalls bevorzugt auf der Basis von Hydroxystearinsäuren, mit geringeren Mengen eines Salzes einer Carbonsäure mit einem Diamin sowie einer freien Carbonsäure oder eines freien Diamins als Dispergierhilfsmittel bekannt, deren fließverbessernde Wirkung durch Zusatz weiterer Additive wie Farbmittelderivate noch gesteigert werden kann.

Die Wirksamkeit dieser Mittel ist jedoch nicht in allen Fällen ausreichend, und größerer Zusatz der farblosen Hilfsmittel würde zu einem Abfallen der Farbstärke der hergestellten Druckfarben, Lacke und Pasten führen.

Weiterhin werden in der DE-A-38 03 810 Pigmentpräparationen beschrieben, die Copolymerisate aus α-Olefinen und Estern von α,β-ungesättigten Dicarbonsäuren mit einem mittleren Molekulargewicht von 20 000 zur Reduzierung der Viskosität enthalten und zum Pigmentieren von Polyurethan-Kunststoffen verwendet werden.

Aus der älteren EP-A-498 195 sind Copolymerisate aus α -Olefinen und/oder Alkylvinylethern und ethylenisch ungesättigten Dicarbonsäureanhydriden als Hydrophobierungsmittel für dispersionsgebundene Baustoffe bekannt.

Außerdem werden in der JP-A-156 706/1979 Dispergiermittel für lösungsmittelhaltige Druckfarben beschrieben, die auf Copolymerisaten von α-Olefinen und ungesättigten Dicarbonsäure(anhydride)n basieren, die jedoch nicht weiter umgesetzt oder verestert sind.

Schließlich werden in der JP-A-004 227/1989 für diesen Zweck Blockcopolymere aus einem Polyetherpolyolblock (a) und einem Copolymerblock (b) aus Alkylvinylether oder α-Olefin und Maleinsäureanhydrid empfohlen.

Der Erfindung lag die Aufgabe zugrunde, wirksame Additive zu finden, die eine wirtschaftliche Herstellung fließfähiger lösungsmittelhaltiger Druckfarben und lösungsmittelhaltiger Lacke und pumpbarer Pasten für lösungsmittelhaltige Druckfarben und Lacke ermöglichen und deren Anwendung zu keiner nennenswerten Farbstärkeminderung der Produkte führt.

Demgemäß wurde die Verwendung der eingangs definierten Pigmentzubereitungen zur Herstellung von Pasten für lösungsmittelhaltige Druckfarben und lösungsmittelhaltige Lacke, lösungsmittelhaltigen Druckfarben und lösungsmittelhaltigen Lacken gefunden.

Weiterhin wurden neue Pigmentzubereitungen gefunden, welche
(a) mindestens ein feinteiliges Pigment,
(b') mindestens ein durch radikalische Polymerisation von
   (α ₁') C₁₈- bis C₄₀-Monoolefinen oder
   (α₂) C₈- bis C₄₀-Alkylvinylethern oder
   (α₃) Mischungen aus C₈- bis C₄₀-Alkylvinylethern und bis zu 50 mol-% C₈- bis C₄₀-Monoolefinen mit
   (β) monoethylenisch ungesättigten C₄- bis C₁₂-Dicarbonsäuren oder -Dicarbonsäureanhydriden erhältliches Copolymerisat mit einer Molmasse von 500 bis 12 000 g/mol, dessen Carboxyl- oder Anhydridgruppen ganz oder teilweise unter Amidbildung mit Ammoniak oder Aminen oder ganz oder teilweise mit Amino- oder Hydroxycarbonsäuren umgesetzt sind,
(c) gegebenenfalls weitere in Pigmentzubereitungen übliche Hilfsmittel,
enthalten.

Als Komponente (a) der erfindungsgemäßen bzw. erfindungsgemäß zu verwendenden Pigmentzubereitungen kommen vorzugsweise die für Druckfarben üblicherweise verwendeten Pigmente in Betracht. Im einzelnen sind z.B. zu nennen:
- Phthalocyaninpigmente, vor allem Kupferphthalocyanine wie vorzugsweise C.I. Pigment Blue 15;
- Diarylgelbpigmente wie C.I. Pigment Yellow 17, 83, 126, 127, 174, vorzugsweise C.I. Pigment Yellow 12, 13, 17 und 81;
- verlackte BON-Säurepigmente wie C.I. Pigment 52 und vorzugsweise 57;
- β-Naphtholpigmente wie C.I. Pigment Orange 5;
- Disazopyrazolonpigmente wie C.I. Pigment Orange 13 und 34 und C.I. Pigment Red 37 und 41;
- Naphthol AS-Pigmente wie C.I. Pigment Blue 25.

Die als Komponente (b) in den erfindungsgemäß zu verwendenden Pigmentzubereitungen eingesetzten Copolymerisate aus (α₁) C₈- bis C₄₀-Monoolefinen oder (α₂) C₈- bis C₄₀-Alkylvinylethern oder (α₃) Mischungen von C₈- bis C₄₀-Alkylvinylethern mit bis zu 50 mol-% C₈- bis C₄₀-Monoolefinen und (β) monoethylenisch ungesättigten C₄- bis C₁₂-Dicarbonsäuren oder -Dicarbonsäureanhydriden sind beispielsweise aus den DE-A-39 26 167 und 39 26 168 als Hydrophobierungsmittel für Leder und Pelzfelle bekannt oder nach den dort beschriebenen Methoden erhältlich.

Die mittlere Molmasse der Copolymerisate (b) beträgt in der Regel 500 bis 12 000 g/mol, bevorzugt 1 000 bis 10 000 g/mol.

Geeignete Monoolefine (α₁) haben in der Regel 8 bis 40 C-Atome, bevorzugt 18 bis 40 C-Atome und besonders bevorzugt 20 bis 30 C-Atome. Sie können linear, verzweigt oder auch cyclisch (z.B. Cycloocten) sein. Besonders bevorzugt sind lineare α -Olefine.

Beispiele für Monoolefine (α₁) sind n-Octen-1, 2,4,4-Trimethylpenten-1, 2,4,4-Trimethylpenten-2, Diisobuten (technisches Isomerengemisch aus ca. 80 % 2,4,4-Trimethylpenten-1 und ca. 20 % 2,4,4-Trimethylpenten-2), 4,4-Dimethylhexen-1, Decen-1, Dodecen-1, Tetradecen-1, Hexadecen-1, Octadecen-1, C₂₀-Olefin-1, C₂₂-Olefin-1, C₂₄-Olefin-1, C₃₀-Olefin-1, C₃₆-Olefin-1 und C₄₀-Olefin-1 sowie die Gemische C₁₂- bis C₁₄-Olefin-1, C₂₀- bis C₂₄-Olefin-1 und C₂₄- bis C₂₈-Olefin-1.

Bei den Olefinen (α₁) handelt es sich um Handelsprodukte, die von der Herstellung her geringe Mengen (etwa bis zu 5 Gew.-%) an inerten organischen Kohlenwasserstoffen enthalten können. Sie können jedoch ohne weitere Reinigung direkt zur Polymerisation eingesetzt werden.

Geeignete Alkylvinylether (α₂) haben in der Regel 8 bis 40 C-Atome, vorzugsweise 16 bis 30 C-Atome. Sie können linear, verzweigt oder auch cyclisch sein.

Beispiele für Alkylvinylether (α₂) sind n-Octylvinylether, 2-Ethylhexylvinylether, 2,2,4-Trimethylpentylvinylether, n-Decylvinylether, n-Dodecylvinylether, Isododecylvinylether, n-Tridecylvinylether, Isotridecylvinylether, Tetradecylvinylether, Hexadecylvinylether, Octadecylvinylether, Eicosylvinylether, Docosylvinylether, Tetracosylvinylether, Hexacosylvinylether, Octacosylvinylether, Oleylvinylether und Cyclooctylvinylether sowie deren Mischungen.

Die Alkylvinylether (α₂) können auch bis zu 50 mol-% Monoolefine (α₁) enthalten. Als Beispiel für eine derartige Komponente (α₃) sei eine Mischung von n-Octadecylvinylether mit 25 mol-% n-Octadecen-1 genannt.

Geeignete monoethylenisch ungesättigte Dicarbonsäuren oder Dicarbonsäureanhydride (β) haben in der Regel 4 bis 12 C-Atome, vorzugsweise 4 bis 5 C-Atome. Für die Copolymerisation bevorzugt eingesetzt werden die Dicarbonsäureanhydride. Als Beispiele seien Maleinsäure, Fumarsäure, Methylenmalonsäure, Glutaconsäure, Itaconsäure, Mesaconsäure und Citraconsäure und deren Mischungen sowie die entsprechenden Anhydride und deren Mischungen genannt. Ganz besonders bevorzugt ist Maleinsäureanhydrid.

Die neuen Pigmentzubereitungen enthalten Copolymerisate (b') mit mittleren Molmassen von in der Regel 500 bis 12 000 g/mol, vorzugsweise 1 000 bis 10 000 g/mol.

Die eingesetzten Monoolefine (α₁') haben in der Regel 18 bis 40 C-Atome, bevorzugt 20 bis 30 C-Atome und sind vorzugsweise lineare α-Olefine. Beispiele sind Octadecen-1 und vor allem C₂₀-Olefin-1, C₂₂-Olefin-1, C₂₄-Olefin-1, auch C₃₀-Olefin-1, C₃₆-Olefin-1, C₄₀-Olefin-1 sowie vor allem die Gemische C₂₀- bis C₂₄-Olefin-1 und C₂₄- bis C₂₈-Olefin-1.

Die weiteren Komponenten (α₂), (α₃) und (β) entsprechen denjenigen der erfindungsgemäß zu verwendenden Pigmentzubereitungen.

Die Copolymerisate (b) sowohl der neuen als auch der erfindungsgemäß zu verwendenden Pigmentzubereitungen enthalten in der Regel 40 bis 60 mol-% Monoolefin (α₁') bzw. (α₁), Alkylvinylether (α₂) oder deren Mischungen (α₃) und 60 bis 40 mol-% Dicarbonsäuren oder deren Anhydride (β).

In beiden Fällen sind Copolymerisate (b) von Monoolefinen (α₁) bzw. (α₁') mit (β) bevorzugt. Unter diesen sind diejenigen mit Maleinsäureanhydrid als Komponente (β) besonders bevorzugt.

Sie können, wie in den DE-A-39 26 167 und 39 26 168 beschrieben, nach allen bekannten üblichen Polymerisationsverfahren hergestellt werden, z.B. durch Suspensions-, Fällungs-, Lösungspolymerisation und besonders bevorzugt durch Substanzpolymerisation.

Die Monomeren (α) und (β) werden dabei üblicherweise im Molverhältnis 1,1:1 bis 1:1 eingesetzt. Vorzugsweise polymerisiert man die Monomeren im Molverhältnis 1:1 oder verwendet lediglich einen etwa 1 gew.-%igen Überschuß an Monomeren (α).

Die Copolymerisation wird vorzugsweise in Gegenwart von üblicherweise verwendeten Radikale bildenden Verbindungen durchgeführt, von denen in der Regel 0,01 bis 10 Gew.-%, bevorzugt 0,2 bis 5 Gew.-%, bezogen auf die eingesetzten Monomeren, zugegeben werden.

Die Reaktionstemperatur beträgt in der Regel zwischen 80 und 300°C, vorzugsweise zwischen 120 und 200°C, wobei die niedrigste zu wählende Polymerisationstemperatur vorzugsweise mindestens 20°C über der Glastemperatur des gebildeten Polymeren liegt.

Bei der Copolymerisation wird zweckmäßigerweise unter Ausschluß von Sauerstoff, bevorzugt im Stickstoffstrom gearbeitet.

Die Carboxyl- oder Anhydridgruppen der so erhaltenen Copolymerisate (b) werden ganz oder teilweise amidiert. Vorzugsweise sind dann bis zu etwa 50 % dieser Gruppen umgesetzt.

Die dazu erforderliche Umsetzung der Copolymerisate mit Ammoniak, den entsprechenden Aminen, Amino- oder Hydroxycarbonsäuren kann entweder in Substanz oder in einem inerten Lösungsmittel wie Xylol, Toluol und Dioxan bei 20 bis 150°C, vorzugsweise 40 bis 100°C, durchgeführt werden, wobei zweckmäßigerweise in Abwesenheit von Wasser gearbeitet wird bzw. das entstehende Reaktionswasser entfernt wird.

Zur Amidbildung können Ammoniak sowie primäre und sekundäre Amine mit in der Regel 1 bis 40 C-Atomen, vorzugsweise 3 bis 30 C-Atomen eingesetzt werden. Geeignet sind beispielsweise:
- gesättigte und ungesättigte aliphatische und cycloaliphatische Amine wie Methylamin, Ethylamin, n-Propylamin, Isopropylamin, n-Butylamin, Isobutylamin, Hexylamin, Cyclohexylamin, Methylcyclohexylamin, 2-Ethylhexylamin, n-Octylamin, Isotridecylamin, Talgfettamin, Stearylamin und Oleylamin sowie Dimethylamin, Diethylamin, Di-n-propylamin, Diisopropylamin, Di-n-butylamin, Diisobutylamin, Dihexylamin, Dicyclohexylamin, N-Methylcyclohexylamin, N,N-Bis(methylcyclohexyl)amin, Di-2-ethylhexylamin, Di-n-octylamin, Diisotridecylamin, Ditalgfettamin, Distearylamin und Dioleylamin;
- aromatische Amine wie Anilin, Naphthylamin, o-, m- und p-Toluidin und 2-Phenylethylamin sowie N-Ethyl-o-toluidin;
- Di- und Oligoamine wie Ethylendiamin, 1,3-Diaminopropan, Hexamethylendiamin, Dipropylendiamin, 2-Diethylaminoethylamin, 3-Dimethylaminopropylamin und 3,3'-Dimethyl-4,4'-diaminophenylmethan sowie Diethyltriamin, Dipropyltriamin, Bishexamethylentriamin und N-Talgfett-1,3-diaminopropan;
- Alkoholamine wie Ethanolamin und n-Propanolamin sowie Diethanolamin und Di-n-propanolamin;
- Ether- und Polyetheramine wie Morpholin, 4,9-Dioxadodecan-1,12-diamin, 4,7,10-Trioxatridecan-1,13-diamin und Bis- (3-aminopropyl)-polytetrahydrofuran.

Weiterhin können die Carboxyl- und Anhydridgruppen der Polymerisate auch, vorzugsweise bis zu etwa 50 %, mit Amino- oder Hydroxycarbonsäuren umgesetzt sein, die jeweils in der Regel 2 bis 18 C-Atome, vorzugsweise 3 bis 12 C-Atome enthalten. Beispiele für solche Säuren sind N-Methylglycin, Alanin, 2-Phenyl-2-aminobuttersäure, Anthranilsäure, 11-Aminoundecansäure, Ethanolaminoessigsäure und Iminodiessigsäure sowie Milchsäure, Hydroxypivalinsäure, Glykolsäure, 4-Hydroxybuttersäure, 5-Hydroxyvaleriansäure und 12-Hydroxystearinsäure.

Die Copolymerisate (b) sind in den erfindungsgemäßen Pigmentzubereitungen in Mengen von im allgemeinen 1 bis 30 Gew.-%, vorzugsweise 2 bis 20 Gew.-%, bezogen auf die Pigmente (a), enthalten.

Als weitere in Pigmentzubereitungen übliche Mittel (c) kommen beispielsweise Farbmittelderivate in Betracht, die eine oder mehrere saure Gruppen wie Carbonsäure- oder Sulfonsäuregruppen und/oder Carbonamid- oder Sulfonamidgruppen aufweisen und die in den erfindungsgemäßen Pigmentzubereitungen in Mengen von in der Regel 1 bis 20 Gew.-%, bevorzugt 1 bis 10 Gew.-%, bezogen auf (a), eingesetzt werden können. Diese Derivate haben zusammen mit den Copolymerisaten (b) eine synergistische Wirkung, die durch den Zusatz von Aminen oder Polyaminen als weiteren Additiven (in der Regel 1 bis 20 Gew.-%, vorzugsweise 2 bis 10 Gew.-%, bezogen auf (a)), in einigen Fällen noch verstärkt werden kann. Bevorzugte Farbmittelderivate (c) sind die Aminsalze von sauren Derivaten der Pigmente (a).

Beispiele für geeignete Farbmittelderivate (c) sind bei den Azopigmenten C.I. Pigment Yellow 12 und 13 besonders Mischkupplungsprodukte von l,4-Diamino-dichlordiphenyl mit Acetessiganilid, -m-xylidid oder -o-toluidid und Acetessigsulfanilsäure oder Sulfophenylpyrazolon-5 sowie das Kupplungsprodukt von Flavonsäure auf 2 Mol Acetessig-m-xylidid.

Bei Kupferphthalocyanin (CuPc) C.I. Pigment Blue 15 eignen sich insbesondere CuPc-Sulfonsäuren mit 1 bis 4, bevorzugt 1 oder 2 Sulfonsäuregruppen, daneben auch CuPc-Derivate mit 1 bis 4 Sulfonamidgruppen und solche mit Sulfonsäure- und Sulfonamidgruppen.

Weiterhin enthalten die erfindungsgemäßen Pigmentzubereitungen als Mittel (c) üblicherweise oberflächenaktive Mittel, die zur Verbesserung der Benetzung und/oder der Verteilung der Pigmente dienen. Solche Mittel sind z.B. Harze, Harzsäuren sowie deren Salze, sulfierte Naturöle wie Türkischrotöl, Abietinsäure, Abiethylamin, Resinate, Kolophonium und dessen Abwandlungen (Modifizierungen). Der Anteil dieser Mittel kann bis zu 50 Gew.-%, bezogen auf die Pigmente (a), betragen.

Die Mittel (c) und deren Anwendung gehören zum Stand der Technik und sind dem Fachmann geläufig.

Zur Herstellung der erfindungsgemäßen Pigmentzubereitungen können die Pigmente (a) direkt in der bei der Synthese oder beim Finish anfallenden Suspension mit (b) und gegebenenfalls (c) belegt und anschließend durch übliche Filtration isoliert werden. Bevorzugt werden die Pigmente jedoch nach dem Finish belegt.

Dazu können die Pigmente (a) im trockenen Zustand mit (b) und gegebenenfalls (c) mechanisch gemischt werden. Insbesondere bei der Herstellung von Pasten können die Pigmente (a) aber auch direkt in den jeweils verwendeten, gegebenenfalls Druckfarbebindemittel enthaltenden organischen Flüssigkeiten, wie Mineralölen, aromatischen, aliphatischen und cycloaliphatischen Kohlenwasserstoffen, Alkoholen, Estern, Ketonen und deren Mischungen, mit (b) und gegebenenfalls (c) angerieben werden. Die Pasten können dann in üblicher Weise zu Druckfarben oder Lacken weiter verarbeitet werden.

Die erfindungsgemäßen Pigmentzubereitungen zeigen im Vergleich mit den unbelegten Pigmenten deutlich verbesserte koloristische, rheologische und drucktechnische Eigenschaften.

Von besonderem Vorteil ist die Kombination von gutem Fließverhalten der mit diesen Pigmentzubereitungen hergestellten Pasten und Druckfarben und hoher Transparenz und hohem Glanz der zu erhaltenden Drucke.

### Beispiele

A. Herstellung und Prüfung von Mineralölpasten und Druckfarben
   Mit den Pigmentzubereitungen der Beispiele 1 bis 12 wurden nach den folgenden Angaben Mineralölpasten und Druckfarben hergestellt und anschließend geprüft.
   1. Mineralölpasten
      1.1 Herstellung
         Beispiele 1 bis 11:
            In Mineralöl PKWF 6/9 (Fa. Haltermann, Hamburg) wurde, gegebenenfalls unter Erwärmen im Wasserbad, zunächst das Copolymerisat (b) gelöst, und anschließend wurde das Pigment zugegeben. Nach Durchmischen mit dem Spatel wurde die Paste auf dem Bühlerwalzenstuhl SDY 200 ohne Druck (1. und 2. Walze) homogenisiert und dann bei 3 bis 5 bar Anpreßdruck über die Abnehmerwalze aufgenommen.
         Beispiel 12:
            Analog zu den Beispielen 1 bis 11 wurde das bereits mit dem Copolymerisat (b) belegte Pigment zu einer Mineralölpaste verarbeitet.
            Die jeweiligen Zusammensetzungen der so hergestellten Pasten sind den Beispielen zu entnehmen.
      1.2 Beurteilung der rheologischen Eigenschaften
         0,25 g der nach 1.1 hergestellten Mineralölpaste wurden zwischen zwei Glasplatten (Objektträger 52 x 76 x 1 mm) gelegt und mit steigenden Gewichten (31,25 g, 62,5 g, 125 g, 250 g, 500 g, 1000 g) jeweils 60 sec belastet. Nach jeder Gewichtsbelastung wurde der Durchmesser des Pastenkreises gemessen und in Millimeter angegeben ("Kreismethode").
   2. Offsetdruckfarben
      2.1 Herstellung
         Die nach 1.1. hergestellten Mineralölpasten wurden mit einem Firnis aus 43 Teilen eines acrylsäuremodifizierten Kolophoniumharzes (Alresat® SKA 932, Fa. Albert, Wiesbaden) und 37 Teilen Lackleinöl auf die in den Beispielen angegebene jeweilige Pigmentkonzentration verdünnt und dann mit dem Dispermat-Dissolver (Zahnscheibe, 3 cm Durchmesser, 12 000 U/min) 10 min bei 70°C vordispergiert. Anschließend wurde die Farbe auf dem auf 35°C temperierten Bühlerwalzenstuhl SDY 200 dreimal bei 10 bar Anpreßdruck der Walzen angerieben.
      2.2 Bestimmung der Lasur
         Die nach 2.1 hergestellte Offsetfarbe wurde auf dem Telleranreiber (Fa. Engelsmann) mit einer Lösung eines Alkydharzes auf der Basis von trocknenden pflanzlichen Fettsäuren, Glycerin und Phthalsäureanhydrid (Alkydal® F 681, 75%ig in Benzin, Fa. Bayer) bei 25 kg Belastung auf 10 % Pigmentgehalt verdünnt und gemischt. Die Mischung wurde mit dem Erichsen-Filmziehgerät in 100 µm Schichtdicke auf Kontrastkarton (schwarz-weiß) aufgetragen, wobei der Farbe auf der Reibplatte unmittelbar vor dem Auftrag 8 Tropfen Trockenstoff "Octa Soligen Kobalt (1,7 %), Blei (15,7 %) flüssig" (Fa. Hoechst) zugemischt wurden. Die Lasur wurde visuell abgemustert.
      2.3 Beurteilung des Fließverhaltens
         Das Fließverhalten der Offsetdruckfarben wurde nach der Fließblechmethode bestimmt. Zur Herstellung des Fließbleches wurde mit dem Erichsen-Tiefziehgerät auf einem 25 x 6 cm Tiefziehblech eine näpfchenförmige Vertiefung von 10 mm gezogen. Der Mittelpunkt dieser Vertiefung ist die Stufe 1. Im Abstand von jeweils 40 mm wurden am Rand des Bleches Markierungen angebracht, die den Noten 2 bis 5 entsprechen.
         Je 3 g der zu prüfenden Offsetfarbe wurden in die Vertiefung des waagerecht liegenden Bleches eingewogen. Nach 30 min Lagerung wurde das Blech im Klimaraum senkrecht aufgehängt, so daß die Farbe nach unten fließen konnte. Druckfarben, die nicht flossen, erhielten die Note 1. Fließende Druckfarben wurden nach 15, 30 und 60 min Laufzeit abgemustert. Systeme, die während der Lagerung zur Thixotropie neigten, wurden direkt nach Einwaage der Druckfarbe senkrecht aufgehängt. Gemessen wurde in diesen Fällen die Zeit, in der die einzelnen Bewertungsstufen erreicht wurden (max. 30 min Laufzeit).
B. Ausführungsbeispiele
   1. Herstellung der Copolymerisate (b)
      Die Molmasse der Copolymerisate wurde jeweils durch Gelpermeationschromatographie bestimmt, wobei Tetrahydrofuran als Eluent diente und eng verteilte Fraktionen von Polystyrol zur Eichung eingesetzt wurden.
      Copolymerisat 1 (Vorstufe)
      In einem für Polymerisationen ausgerüsteten Edelstahlreaktor (Rührer und Dosierungsvorrichtungen) wurden 1195 g eines C₂₀- bis C₂₄-Olefin-1-Gemisches (Gulftene 20-24, Handelsprodukt der Fa. Gulf Oil Chemical Company, USA) in einem schwachen Stickstoffstrom unter Rühren auf 190°C erhitzt. Sobald diese Temperatur erreicht war, wurden innerhalb von 4 h 392 g auf 70°C erhitztes Maleinsäureanhydrid (MSA) und separat davon 16 g Di-tert.-butylperoxid gleichmäßig zugegeben. Anschließend wurde das Reaktionsgemisch noch weitere 2 h bei 190°C gerührt.
      Die mittlere Molmasse des erhaltenen Copolymerisates betrug 8900 g/mol.
   Copolymerisat 1a
      Zu 27,8 g eines Imidazolins aus Tallölfettsäure und Diethylentriamin (Aminzahl 3,8 mmol bas.N/g) wurde eine Lösung von 100 g des Copolymerisates 1 in 200 g Xylol bei 120°C und 460 mbar innerhalb von 4 h zugetropft. Anschließend wurde noch 6 h bei dieser Temperatur gerührt.
      Die Isolierung des Produktes erfolgte durch Abdestillieren von Xylol unter vermindertem Druck.
   Copolymerisat 1b
      Analog zur Herstellung des Copolymerisats la wurde das Copolymerisat 1 mit der doppelten Menge des Tallölfettsäureaminoethylimidazolins umgesetzt.
   Copolymerisat 1c
      Zu einer Lösung von 216 g des Copolymerisates 1 in 100 ml Xylol wurden bei 100°C 21,4 g Ethyl-1-naphthylamin zugetropft. Das Gemisch wurde dann 7 h bei 140°C gerührt.
      Das Produkt wurde durch Abdestillieren von Xylol unter vermindertem Druck isoliert. Die Säurezahl betrug 83 mg KOH/g.
   Copolymerisat 1d
      Eine Mischung aus 150 g des Copolymerisates 1 und 3,2 g Piperazin wurde 4 h bei 120°C gerührt, wonach die Säurezahl 120 mg KOH/g betrug. Dann wurden 200 ml Dioxan und 50 ml Wasser zugegeben. Anschließend wurde noch 4 h bei 100°C gerührt.
      Das Produkt wurde anschließend durch Abdestillieren des Lösungsmittels bei 15 mbar isoliert.
   Copolymerisat 1e
      Zu 320 g des Copolymerisates 1 wurden bei 90°C unter Rühren 15,8 g Milchsäure zugegeben. Nach 10stündigem Rühren bei 90°C wurden 21,4 g 2-Ethyl-2-hydroxymethylpropandiol-1,3 zugegeben. Dann wurde noch ca. 10 h bei dieser Temperatur gerührt, wonach die Säurezahl 150 mg KOH/g betrug.
   Copolymerisat 1f
      Eine Lösung von 150 g des Copolymerisates 1 und 11,7 g Talgfett-1,3-diaminopropan in 300 ml Xylol wurde 4 h bei 80°C gerührt.
      Das Produkt wurde durch Abdestillieren von Xylol unter vermindertem Druck isoliert. Die Säurezahl betrug 28 mg KOH/g.
   Copolymerisat 1g
      Zu einer Lösung von 305 g des Copolymerisates 1 in 800 ml Xylol wurden unter Rühren 972 g eines Imidazolins aus Tallölfettsäure und Diethylentriamin (Aminzahl 2,6) zugetropft. Diese Mischung wurde dann unter Einleiten eines Stickstoffstroms auf 145°C erhitzt und 9 h am Wasserabscheider gerührt.
      Das Produkt wurde durch Abdestillieren von Xylol unter vermindertem Druck isoliert. Die Säurezahl betrug 12,4 mg KOH/g und die Aminzahl 1,4 mmol bas.N/g.
   Copolymerisat 2 (Vorstufe)
      In den oben beschriebenen Edelstahlreaktor wurden 1082 g Diisobuten (Isomerengemisch aus 80 % 2,4,4-Trimethylpenten-1 und 20 % 2,4,4-Trimethylpenten-2) und 49 g MSA eingefüllt. Der dicht verschlossene Reaktor wurde dann mit 6 bar Stickstoff abgepreßt, entspannt und noch zweimal mit 6 bar Stickstoff abgepreßt. Anschließend wurde der Reaktorinhalt unter Rühren auf 160°C erhitzt. Bei dieser Temperatur wurden dann innerhalb von 2 h weitere 931 g MSA und gleichzeitig separat davon innerhalb von 3 h eine Lösung von 63 g Di-tert.-butylperoxid in 150 g Diisobuten zugegeben. Anschließend wurde das Reaktionsgemisch noch 1 h bei 160°C gerührt.
      Das nichtpolymerisierte Diisobuten (246 g) wurde bei einem Druck von 100 mbar abdestilliert. Die verbleibende klare goldgelbe Schmelze wurde zum Abkühlen auf ein Blech gegossen.
      Die mittlere Molmasse des erhaltenen spröden Harzes betrug 3000 g/mol.
   Copolymerisat 2a
      Zu einer Lösung von 105 g des Copolymerisates 2 in 250 ml Dioxan wurde bei 80°C eine Lösung von 13,5 g Stearylamin in 50 ml Dioxan zugetropft. Dann wurde 4 h bei dieser Temperatur gerührt, wonach die Säurezahl 100 mg KOH/g betrug. Nach Zugabe von 50 ml Wasser wurde noch 4 h bei 100°C gerührt.
      Das Produkt wurde anschließend durch Abdestillieren des Lösungsmittels bei 15 mbar isoliert.
   Copolymerisat 2b
      Analog zur Herstellung des Copolymerisates 2a wurde das Copolymerisat 2 mit 3,7 g (0,05 mol) n-Butylamin umgesetzt.
   Copolymerisat 3 (Vorstufe)
      Die Herstellung des C₁₂- bis C₁₄-Olefin-1/MSA-Copolymerisates erfolgte analog zur Herstellung des Copolymerisates 1.
      Die mittlere Molmasse des erhaltenen Copolymerisats betrug 4200 g/mol.
   Copolymerisat 3a
      Zu 577 g des Copolymerisates 3 wurden bei 90°C unter Rühren 30 g Milchsäure zugegeben. Nach 20stündigem Rühren bei 90°C wurden 114 g Diisotridecylamin zugegeben. Dann wurde noch ca. 10 h bei dieser Temperatur gerührt, wonach die Säurezahl 160 mg KOH/g betrug.
   Copolymerisat 4 (Vorstufe)
      Die Herstellung des C₃₀-Olefin-1/MSA-Copolymerisates erfolgte analog zur Herstellung des Copolymerisates 1.
      Die mittlere Molmasse des erhaltenen Copolymerisats betrug 6800 g/mol.
   Copolymerisat 4a
      Zu 155,2 g des Copolymerisates 5 wurden bei 95°C unter Rühren 13,5 g Milchsäure zugegeben. Dann wurde noch weitere 20 h bei dieser Temperatur gerührt, wonach die Säurezahl 10,4 mg KOH/g betrug.
   Copolymerisat 4b
      Eine Mischung aus 155,2 g des Copolymerisates 5 und 4,5 g Phenylglycin wurde bei 160°C 20 h gerührt, wonach die Säurezahl 32 mg KOH/g betrug.
2. Herstellung der Pigmentzubereitungen
   Nach den folgenden Angaben wurden die Pigmente 1 und 2 mit Hilfsmitteln (c) und das Pigment 3 zusätzlich mit einem Copolymerisat (b) belegt.
   Pigment 1
      100 g des nach der DE-A-28 51 752, Beispiel 2 hergestellten Kupferphthalocyanins wurden in Form des wäßrigen Preßkuchens in 2 l Wasser suspendiert. Nach 2stündigem Rühren bei Raumtemperatur wurden 5 g CuPc-Monosulfonsäure in Form des bei der Herstellung anfallenden wäßrigen Preßkuchens zugegeben. Durch Zugabe von 10 gew.-%iger Natronlauge wurde der pH-Wert 9 eingestellt. Nach weiterem 10minütigem Rühren wurde eine Lösung von 6,0 g Talgfett-1,3-diaminopropan in 30 ml Ethylenglykolmonobutylether zugegeben. Anschließend wurde noch 1 h gerührt. Das so belegte Pigment wurde durch Filtration abgetrennt, getrocknet und gemahlen.
   Pigment 2
      100 g Kupferphthalocyanin der β-Modikation (in bekannter Weise durch Salzmahlung hergestellt - vgl. Ullmanns Enzyklopädie der technischen Chemie, 4 Auflage, Band 18, S. 512 (1979)) wurden in Form des wäßrigen Preßkuchens zusammen mit 2,5 g CuPc-Monosulfonsäure, ebenfalls in Form des wäßrigen Preßkuchens, 3 h bei 60°C in 1 l Wasser suspendiert. Nach 40 minütigem Rühren wurde das so belegte Pigment abfiltriert, getrocknet und gemahlen.
   Pigment 3
      94,5 g Kupferphthalocyanin der β-Modifikation (in bekannter Weise durch Salzmahlung hergestellt, s. Pigment 2) wurden in Form des wäßrigen Preßkuchens zusammen mit 2,0 g CuPc-Monosulfonsäure, ebenfalls in Form des wäßrigen Preßkuchens, 1 h bei 60°C in 1200 ml Wasser dispergiert. Nach Zusatz einer Lösung von 1,0 g Talgfett-1,3-diaminopropan in 50 ml 1 gew.-%iger Essigsäure wurde die Mischung weitere 2 h bei 60°C gerührt. Dann wurde eine Lösung von 4,0 g Copolymerisat (b) in 50 ml Ethylenglykolmonobutylether zugegeben. Die Suspension wurde anschließend noch 1 h bei 60°C gerührt. Dann wurde durch Zugabe von 10 gew.-%iger Natronlauge der pH-Wert 7,5 eingestellt. Nach weiterem einstündigem Nachrühren wurde das so belegte Pigment durch Filtration abgetrennt, getrocknet und gemahlen.
      Die Zusammensetzungen der Pigmentzubereitungen sowie der nach A. 1.1 hergestellten Mineralölpasten und nach A. 2.1 hergestellten Offsetdruckfarben sind in Tabelle 1 zusammengefaßt.
      Ebenfalls aufgeführt sind die Zusammensetzungen von Vergleichszubereitungen, die anstelle des erfindungsgemäßen Copolymerisates (b) einen nach der DE-A-21 62 484, Beispiel Polyester A hergestellten Polyester (Vergleiche 1 und 2) oder das unbelegte Pigment 3 (Vergleich 3) enthalten.

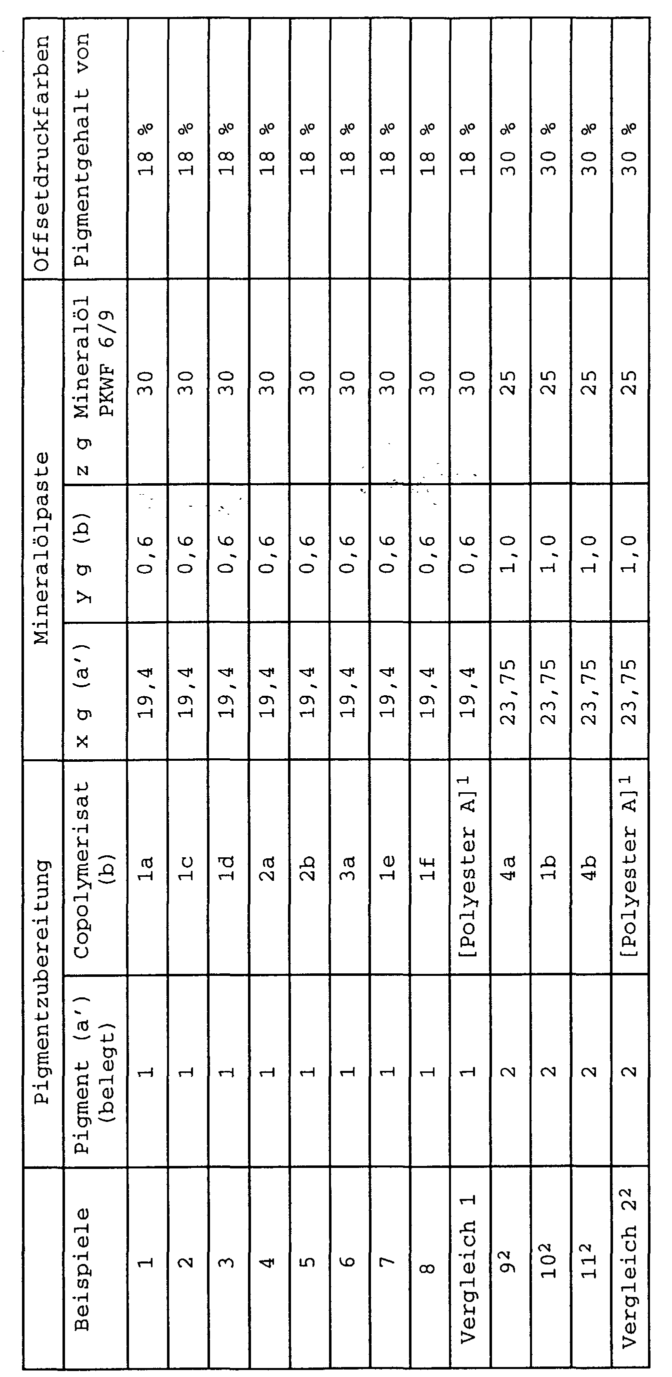

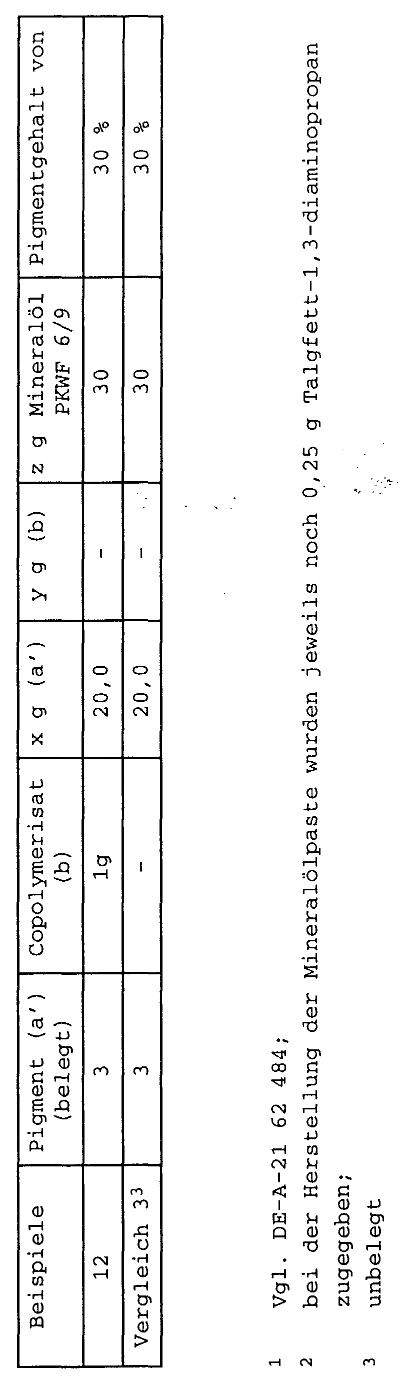

Die erfindungsgemäßen Offsetdruckfarben zeigen gleiche Farbstärke und gleiche Lasur (bestimmt nach A. 2.2) wie die entsprechenden Vergleichsdruckfarben.

In den rheologischen Eigenschaften sind die erfindungsgemäßen Mineralölpasten und Offsetdruckfarben den Vergleichszubereitungen deutlich überlegen, wie die in Tabelle 2 bzw. 3 und 4 aufgeführten, nach A. 1.2 bzw. A. 2.2 bestimmten Meßwerte belegen.

**Tabelle 2:**

| Ergebnisse der Untersuchung der Mineralölpasten nach der Kreismethode (nach A. 1.2) | | | | |
|---|---|---|---|---|
| Beispiele | Kreisdurchmesser [mm] bei Belastung von | | | |
| | 31,25 g | 250 g | 500 g | 1000 g |
| 1 | 40 | - | - | - |
| 2 | 40 | - | - | - |
| 3 | 28 | 38 | 40 | - |
| 4 | 26 | 32 | 38 | 40 |
| 5 | 26 | 36 | 40 | - |
| 6 | 40 | - | - | - |
| 7 | 40 | - | - | - |
| 8 | 40 | - | - | - |
| Vergleich 1 | 22 | 32 | 36 | 40 |
| 9 | 24 | 34 | 38 | 40 |
| 10 | 26 | 36 | 40 | - |
| 11 | 24 | 36 | 40 | - |
| Vergleich 2 | 22 | 30 | 34 | 36 |
| 12 | 24 | 32 | 34 | 40 |
| Vergleich 3 | 20 | 26 | 28 | 32 |

**Tabelle 3:**

| Fließblechwerte der Offsetdruckfarben ohne Lagerung nach (A. 2.2) | | | | |
|---|---|---|---|---|
| Beispiele | Laufzeit [sec] bis zum Erreichen der Stufe | | | |
| | 2 | 3 | 4 | 5 |
| 1 | 13 | 50 | 150 | 690 |
| 2 | 18 | 65 | 180 | 660 |
| 3 | 8 | 33 | 80 | 180 |
| 4 | 15 | 65 | 280 | 840 |
| 5 | 17 | 80 | 210 | 1380 |
| 6 | 14 | 45 | 120 | 335 |
| 7 | 15 | 53 | 125 | 330 |
| 8 | 9 | 33 | 87 | 255 |
| Vergleich 1 | 15 | 75 | 600 | - |
| 9 | 150 | 600 | - | - |
| 10 | 100 | 700 | - | - |
| 11 | 50 | 170 | 395 | 1090 |
| Vergleich 2 | 120 | - | - | - |
| 12 | 45 | 168 | 450 | 1105 |
| Vergleich 3 | 180 | - | - | - |

**Tabelle 4:**

| Fließblechwerte der Offsetdruckfarben nach 30 min Lagerung nach (A. 2.2) | | | |
|---|---|---|---|
| Beispiele | Stufe nach Laufzeit von | | |
| | 5 min | 10 min | 30 min |
| 1 | 1,4 | 1,4 | 1,8 |
| 2 | 1,3 | 1,4 | 1,9 |
| 3 | 1,7 | 2,1 | 3,7 |
| 4 | 1,6 | 1,8 | 2,5 |
| 5 | 1,8 | 2,1 | 3,3 |
| 6 | 1,5 | 1,8 | 2,3 |
| 7 | 1,4 | 2,0 | 3,3 |
| 8 | 1,5 | 2,1 | 3,3 |
| Vergleich 1 | 1,3 | 1,5 | 1,8 |
| 9 | 1,1 | 1,3 | 1,6 |
| 10 | 1,1 | 1,2 | 1,5 |
| 11 | 1,2 | 1,6 | 2,3 |
| Vergleich 2 | 1 | 1 | 1 |
| 12 | 1 | 1,5 | 2,5 |
| Vergleich 3 | 1 | 1 | 1 |

## Patentansprüche

1. Verwendung von Pigmentzubereitungen, enthaltend
(a) mindestens ein feinteiliges organisches Pigment,
(b) mindestens ein durch radikalische Polymerisation von
(α₁) C₈- bis C₄₀-Monoolefinen oder
(α₂) C₈- bis C₄₀-Alkylvinylethern oder
(α₃) Mischungen aus C₈- bis C₄₀-Alkylvinylethern und bis zu 50 mol-% C₈- bis C₄₀-Monoolefinen mit
(β) monoethylenisch ungesättigten C₄- bis C₁₂-Dicarbonsäuren oder -Dicarbonsäureanhydriden
erhältliches Copolymerisat mit einer Molmasse von 500 bis 12 000 g/mol, dessen Carboxyl- oder Anhydridgruppen ganz oder teilweise unter Amidbildung mit Ammoniak oder Aminen oder ganz oder teilweise mit Amino- oder Hydroxycarbonsäuren umgesetzt sind,
(c) gegebenenfalls weitere in Pigmentzubereitungen übliche Hilfsmittel,
zur Herstellung von Pasten für lösungsmittelhaltige Druckfarben und lösungsmittelhaltige Lacke, lösungsmittelhaltigen Druckfarben und lösungsmittelhaltigen Lacken.

2. Pasten für lösungsmittelhaltige Druckfarben und lösungsmittelhaltige Lacke, lösungsmittelhaltige Druckfarben und lösungsmittelhaltige Lacke, enthaltend Pigmentzubereitungen gemäß Anspruch 1.

3. Pigmentzubereitungen, enthaltend
(a) mindestens ein feinteiliges organisches Pigment,
(b')mindestens ein durch radikalische Polymerisation von
(α₁') C₁₈- bis C₄₀-Monoolefinen oder
(α₂) C₈- bis C₄₀-Alkylvinylethern oder
(α₃) Mischungen aus C₈- bis C₄₀-Alkylvinylethern und bis zu 50 mol-% C₈- bis C₄₀-Monoolefinen mit
(β) monoethylenisch ungesättigten C₄- bis C₁₂-Dicarbonsäuren oder -Dicarbonsäureanhydriden
erhältliches Copolymerisat mit einer Molmasse von 500 bis 12 000 g/mol, dessen Carboxyl- oder Anhydridgruppen ganz oder teilweise unter Amidbildung mit Ammoniak oder Aminen oder ganz oder teilweise mit Amino- oder Hydroxycarbonsäuren umgesetzt sind,
(c) gegebenenfalls weitere in Pigmentzubereitungen übliche Hilfsmittel.

4. Pigmentzubereitungen nach Anspruch 3, die 1 bis 30 Gew.-% (b'), bezogen auf (a), enthalten.

## Claims

1. The use of pigment formulations containing
(a) at least one finely divided organic pigment,
(b) at least one copolymer obtainable by free radical polymerization of
(α₁) C₈-C₄₀-monoolefins or
(α₂) C₈-C₄₀-alkyl vinyl ethers or
(α₃) a mixture of C₈-C₄₀-alkyl vinyl ethers and up to 50 mol % of C₈-C₄₀-monoolefins with
(β) monoethylenically unsaturated C₄-C₁₂-dicarboxylic acids or C₄-C₁₂-dicarboxylic anhydrides
and having a molecular weight of from 500 to 12,000 g/mol, some or all of whose carboxyl or anhydride groups are reacted, with amide formation, with ammonia, amines, or amino- or hydroxycarboxylic acids and
(c) if required, further assistants conventionally used in pigment formulations, for the preparation of pastes for solvent-containing printing inks and solvent-containing coatings, and of solvent-containing printing inks and solvent-containing coatings.

2. Pastes for solvent-containing printing inks and solvent-containing coatings, and solvent-containing printing inks and solvent-containing coatings, containing pigment formulations as claimed in claim 1.

3. Pigment formulations containing
(a) at least one finely divided organic pigment,
(b') at least one copolymer obtainable by free radical polymerization of
(α₁') C₁₈-C₄₀-monoolefins or
(α₂) C₈-C₄₀-alkyl vinyl ethers or
(α₃) a mixture of C₈-C₄₀-alkyl vinyl ethers and up to 50 mol % of C₈-C₄₀-monoolefins with
(β) monoethylenically unsaturated C₄-C₁₂-dicarboxylic acids or C₄-C₁₂-dicarboxylic anhydrides
and having a molecular weight of from 500 to 12,000 g/mol, some or all of whose carboxyl or anhydride groups are reacted, with amide formation, with ammonia or amines, or with amino- or hydroxycarboxylic acids, and
(c) if required, further assistants conventionally used in pigment formulations.

4. Pigment formulations as claimed in claim 3, which contain from 1 to 30% by weight of (b'), based on (a).

## Revendications

1. Utilisation de préparations de pigment, contenant
(a) au moins un pigment organique finement divisé
(b) au moins un copolymère pouvant être obtenu au moyen d'une polymérisation par voie radicalaire
(α₁) de mono-oléfines en C₈ à C₄₀ ou
(α₂) d'éthers vinyliques d'alkyle en C₈ à C₄₀ ou
(α₃) de mélanges d'éthers vinyliques d'alkyle en C₈ à C₄₀ et de jusqu'à 50% en moles de mono-oléfines en C₈ à C₄₀ avec
(β) des acides ou anhydrides dicarboxyliques à insaturation mono-éthylénique en C₄ à C₁₂,
ayant une masse molaire de 500 à 12 000 g/mole, dont les groupes carboxyles ou anhydrides ont totalement ou partiellement réagi en formant un amide avec de l'ammoniaque ou des amines ou totalement ou partiellement réagi avec des acides amino- ou hydroxy-carboxyliques,
(c) éventuellement d'autres adjuvants courants dans les préparations de pigments,
en vue de préparer des pâtes pour les encres d'impression contenant un solvant et les laques contenant un solvant, des encres d'impression contenant un solvant et des laques contenant un solvant.

2. Pâtes pour encres d'impression contenant un solvant et laques contenant un solvant, encres d'impression contenant un solvant et laques contenant un solvant contenant des préparations de pigments selon la revendication 1.

3. Préparations de pigment contenant
(a) au moins un pigment organique finement divisé,
(b') au moins un copolymère pouvant être obtenu au moyen d'une polymérisation par voie radicalaire
(α₁') de mono-oléfines en C₁₈ à C₄₀ ou
(α₂) d'éthers vinyliques d'alkyle en C₈ à C₄₀ ou
(α₃) de mélanges d'éthers vinyliques d'alkyle en C₈ à C₄₀ et jusqu'à 50% en moles de mono-oléfines en C₈ à C₄₀ avec
(β) des anhydrides ou acides dicarboxyliques à insaturation mono-éthylénique en C₄ à C₁₂,
ayant une masse molaire de 500 à 12 000 g/mole, dont les groupes carboxyles ou anhydrides ont totalement ou partiellement réagi avec formation d'amides avec de l'ammoniaque ou des amines ou totalement ou partiellement réagi avec des acides amino- ou hydroxy-carboxyliques,
(c) éventuellement d'autres adjuvants courants dans les préparations de pigments.

4. Préparations de pigment selon la revendication 3, qui contiennent 1 à 30% en poids de (b') par rapport à (a).
